# EUROPÄISCHE PATENTSCHRIFT

(11) **EP 1 339 575 B1**
(45) Veröffentlichungstag und Bekanntmachung des Hinweises auf die Patenterteilung: **01.03.2006**
(21) Anmeldenummer: 01999494.6
(22) Anmeldetag: 06.12.2001
(51) Int. Cl.: B60R 22/46

(54) **VERFAHREN ZUR ANSTEUERUNG EINES REVERSIBLEN GURTSTRAFFERS**
METHOD FOR CONTROLLING A REVERSIBLE BELT TIGHTENER
PROCEDE D'ACTIVATION D'UN TENDEUR DE CEINTURE REVERSIBLE

(30) Priorität: 08.12.2000 DE 10061040
(43) Veröffentlichungstag der Anmeldung: 03.09.2003
(73) Patentinhaber: DaimlerChrysler AG, 70567 Stuttgart (DE)
(72) Erfinder: BULLINGER, Wilfried, 70825 Korntal-Münchingen (DE); EBERLE, Walter, 73269 Hochdorf (DE)
(86) Internationale Anmeldenummer: PCT/EP2001/014327
(87) Internationale Veröffentlichungsnummer: WO 2002/046005

(56) Entgegenhaltungen:
- EP-A- 0 747 272
- DE-A- 19 537 226
- US-A- 5 788 281

## Beschreibung

Die Erfindung betrifft ein Verfahren zur Ansteuerung eines reversiblen Gurtstraffers gemäß dem Oberbegriff des Patentanspruchs 1.

Sicherheitsgurte, welche heute üblicherweise in Kraftfahrzeugen verbaut werden, verfügen über einen Mechanismus zum automatischen Aufwickeln des losen Gurtbandes auf eine Gurtaufwickelrolle, welche auf einer Gurtspule angeordnet ist. Durch das automatische Aufwickeln wird erreicht, dass der angelegte Gurt locker am Körper eines Insassen anliegt und bei Nichtgebrauch des Sicherheitsgurts auf der Gurtaufwickelrolle aufgerollt ist. Das Abwickeln des Gurts von der Gurtaufwickelrolle geschieht gegen ein Drehmoment, welches von einer Rückzugsfeder erzeugt wird, und ist auch bei angelegtem Gurt möglich, um dem Insassen eine weitgehend freie Bewegung zu ermöglichen.

Weiterhin ist üblicherweise eine Gurtauszugssperre vorhanden, welche, ausgelöst durch eine Ansteuervorrichtung mit gurtband- und fahrzeugsensitivem Sensor, bei schnellem Abwickeln des Gurts von der Gurtaufwickelrolle, ab einer vorgegebenen Beschleunigung der Gurtaufwickelrolle in Abwickelrichtung oder ab einer vorgegebenen Beschleunigung des Fahrzeugs wirksam wird und die Gurtaufwickelrolle in der dann vorliegenden Position festlegt, so dass ein Abwickeln des Gurts verhindert wird. Der hierfür vorgesehene Blockiermechanismus besteht aus einer Blockierverzahnung der Gurtspule, und einer Blockierklinke, welche schwenkbar gelagert ist und durch die Ansteuervorrichtung in die Blockierverzahnung der Gurtspule einschwenkbar ist. Die Verzahnungen an der Gurtspule und der Blockierklinke sind seibstsperrend gestaltet, was dazu führt, dass der Gurtauszug blockiert wird, solange eine Zugbelastung am Gurt anliegt. Wird der Gurt von dieser Zugbelastung entlastet, so wird der Blockiermechanismus in seinen nicht wirksamen Zustand zurückgeführt. Dieses Zurückführen kann magnetisch, elektromotorisch oder mechanisch erfolgen, beispielsweise durch eine Rückholfeder an einer schwenkbar gelagerten Sperrklinke.

Bei vielen Sicherheitsgurten ist zudem ein Gurtstraffer vorhanden, welcher die Schutzwirkung des Sicherheitsgurts erhöht. Der Gurtstraffer weist einen Antrieb mit einem Energiespeicher auf, welcher angesteuert werden kann, um mittels der gespeicherten Energie eine mechanische Vorrichtung anzutreiben. Bei einem pyrotechnischen Energiespeicher beispielsweise wird eine chemischen Substanz mittels eines Zünders zu einer exothermen Reaktion veranlasst. Bei dieser Reaktion wird ein Gasstrom erzeugt, welcher die mechanische Vorrichtung antreibt. Die angetriebene Vorrichtung ist mit der Gurtspule mechanisch verbunden oder mit dieser mechanisch verbindbar, beispielsweise über eine Kupplung. Über diese Verbindung übt die mechanische Vorrichtung auf die Gurtspule ein Drehmoment aus. Aufgrund dieses Drehmoments dreht sich die Gurtspule mit der darauf angeordneten Gurtaufwickelrolle und strafft das abgewickelte Gurtband.

Außer den heutzutage in Kraftfahrzeugen eingesetzten, zumeist pyrotechnischen Gurtstraffern sind auch reversible Gurtstraffer in Fahrzeugen einsetzbar, welche mehrmals, auch schnell hintereinander, ausgelöst werden können. Diese reversiblen Gurtstraffer können unterschiedliche Antriebe aufweisen, beispielsweise kann ein solcher Gurtstraffer durch einen Elektromotor angetrieben werden. Andere reversible Gurtstraffer werden mit Druckluft aus einem Druckspeicher, oder durch eine gespannte Feder angetrieben, wobei der Druckspeicher während des Fahrbetriebs wieder befüllbar und die Feder während des Fahrbetriebs wieder spannbar ist.

Auf diese Weise angetriebene reversible Gurtstraffer ermöglichen eine Straffung des Sicherheitsgurts mit vorgebbarer Stärke, vorgebbarer Geschwindigkeit und vorgebbarer Zeitdauer. Durch die mehrfache Auslösbarkeit des reversiblen Gurtstraffers wird ein vorbeugendes Auslösen desselben ermöglicht. Ein vorbeugendes Auslösen bedeutet, dass der Gurtstraffer in sicherheitskritischen Fahrsituationen ausgelöst wird, welche beispielsweise von Fahrdynamiksensoren oder Fahrzeugumgebungssensoren erkannt werden, oder auf welche durch die Auswertung der Bremspedalbetätigung, des Lenkwinkels oder einer Fahrerbeobachtung geschlossen wird. Über ein vorbeugendes Auslösen hinaus kann ein reversibler Gurtstraffer auch zur haptischen Warnung des Fahrers in sicherheitskritischen Situationen eingesetzt werden. Bei einer vorbeugenden Auslösung des Gurtstraffers oder bei einer Auslösung des Gurtstraffers zu Warnzwecken ist es wünschenswert, dass der Gurt nach einer erfolgten Straffung und bei sichergestelltem Normalfahrbetrieb wieder lose an den Insassen anliegt. Ein sichergestellter Normalfahrbetrieb liegt vor, wenn die Bewertung der Situation durch ein Steuergerät oder einen Gefahrenrechner nicht ergibt, dass eine sicherheitskritische Situation vorliegt.

Nach einer reversiblen Straffung des Sicherheitsgurts mittels eines reversiblen Gurtstraffers kann der Fall eintreten, dass aufgrund eines gurtbandsensitiven Sensors oder eines fahrzeugsensitiven Sensors die Gurtauszugssperre wirksam wurde. Beispiele für gurtbandsensitive Sensoren sind ein mechanischer Fliehkraftsensor im Gurtaufrollmechanismus, ein elektromechanischer Fliehkraftsensor und ein elektronischer Gurtauszugssensor, welcher die Auszugsgeschwindigkeit des Gurtbandes oder dessen Beschleunigung erfasst. Insbesondere kann ein gurtbandsensitiver Sensor dann ansprechen, wenn nach einer Gurtstraffung der gestraffte Gurt unter einer Zugbelastung steht. Diese Zugbelastung des gestrafften Gurts ist insbesondere abhängig von der Stärke der zuvor erfolgten Straffung und von der Sitzposition des Insassen vor der Straffung. Durch diese Zugbelastung wird der Gurt wieder von der Gurtaufwickelrolle abgewickelt, nachdem das vom Gurtstrafferantrieb auf die Gurtspule ausgeübte Drehmoment abnimmt. Erfolgt das Abwickeln des Gurtbandes zu schnell, so spricht der gurtbandsensitive Sensor an und die Gurtauszugssperre wird wirksam. Die Gurtauszugssperre kann auch bereits wirksam werden, wenn der gurtbandsensitive Sensor aufgrund des Aufwickelvorgangs während der Gurtstraffung oder der fahrzeugsensitive Sensor aufgrund der Fahrzeugbewegung anspricht. Ist die Gurtauszugssperre wirksam, so ist es nicht mehr möglich das gestraffte Gurtband abzuwickeln und die Bewegungsfreiheit der Insassen ist stark eingeschränkt. Das Gurtband soll deshalb wieder freigegeben werden, falls eine vorgegebene Bedingung erfüllt ist, beispielsweise nach einer vorgegebenen Zeit oder falls die Ursache für die Auslösung des Gurtstraffers nicht mehr vorhanden ist oder falls ein Normalfahrbetrieb sichergestellt ist. Um das Gurtband wieder freizugeben, ist bei den heute in Kraftfahrzeugen üblichen Gurtauszugssperren die Sperrklinke von der Blockierverzahnung zu lösen.

Aus der DE 20013541 U1 ist eine Sicherheitsgurt-Spanneinrichtung mit einer Gurtaufwickelspule und einer Verriegelungseinrichtung bekannt, mit der eine Rotation der Spule in Abwickelrichtung des Gurtes verhindert werden kann. Es ist ein Gurtspannungs-Steuermechanismus mit einem Motor vorgesehen, welcher dazu dient, ein Drehmoment zu erzeugen, welches auf die Spule übertragen wird. Bei Vorliegen eines Notzustandes des Kraftfahrzeugs wird der Motor in Aufwickelrichtung des Gurtes über eine erste vorgegebenen Zeitspanne angetrieben, um den Fahrgast mit dem gestrafftem Gurt zurück zu halten. Nach Beendigung des Betriebes des Motors und wenn vorgegebenen Bedingungen, welche auf eine Beendigung des Notzustandes hinweisen, erfüllt sind, wird der Motor erneut in Aufwickelrichtung des Gurtes in Betrieb gesetzt, und zwar über eine zweite vorgegebene Zeitspanne T2. Damit soll eine bei Auftreten des Notzustandes eingeleitete Verriegelung wieder gelöst und erreicht werden, dass der Fahrgast leicht freigegeben und zuverlässig aus dem Zustand, in welchem er sicher gehalten wird, befreit wird, was dadurch geschieht, dass der Motor in Aufwickelrichtung des Gurtes betrieben wird. Zur Ermittlung eines Notzustandes, werden die Fahrzeuggeschwindigkeit, die Bremsbetätigungsgeschwindigkeit und die Fahrzeugbeschleunigung mit Schwellwerten verglichen. Die Beendigung des Notzustandes wird erkannt, wenn die Fahrzeuggeschwindigkeit oder Beschleunigung eine Schwelle unterschreiten oder das Fahrzeug anhält.

Als nachteilig wird seitens der Anmelderin angesehen, dass das in der DE 200 13 541 U1 beschriebene Verfahren nicht zuverlässig dazu führt, dass nach Beendigung des Notzustandes die Verriegelung gelöst und das Gurtband frei gegeben wird. Die durch den Betrieb des Motors in Aufwickelrichtung bewirkte Drehung der Gurtspule hängt nämlich nicht nur von der Zeitspanne der Bestromung sondern auch von der eingesetzten Motorstromstärke und der durch den Insassen bewirkten Gegenkraft auf den Gurt ab. Wenn nach Ablauf der vorgegebenen Zeitspanne T2 die bewirkte Drehung der Gurtspule nicht zu einem ausreichendem Drehwinkel geführt hat, welcher die Hinterschneidung einer Blockierverzahlung überwindet, kann der Blockiermechanismus nicht gelöst werden. Wenn nach Ablauf der Zeitspanne T2 die Zugbelastung des Gurtbandes auf den Blockiermechanismus weiterhin anhält, kann ebenso wenig die Blockierung gelöst werden, weil der gurtbandsensitive Sensor sofort anspricht. Wird die Zeitspanne T2 andererseits sehr lang bemessen, so hat dies den Nachteil, dass der bereits gestraffte Gurt mehr als unbedingt nötig eingezogen wird, um die Lösung der Blockierung zu erreichen, was eine unnötige Komfortbeeinträchtigung darstellt.

Aufgabe der Erfindung ist die Verbesserung der Anwendung eines reversiblen Gurtstraffers in einem Kraftfahrzeug. Diese Aufgabe wird erfindungsgemäß durch die Merkmale des Anspruchs 1 gelöst.

Um die Insassen aus dem Zustand mit gestrafftem Gurt wieder freizugeben, wird der Blockiermechanismus kurzzeitig von der Zugbelastung entlastet, welche vom am Insassen eng anliegenden gestrafftem Gurt ausgeht. Hierzu wird der Gurtstraffer in der Weise angesteuert, dass sich die Gurtspule genau so weit in Gurtaufwickelrichtung dreht, dass sich der Blockiermechanismus löst und das Gurtband zum Abwickeln freigibt. Das Lösen des Blockiermechanismus geschieht dadurch, dass die Zugbelastung des Gurtbandes keine Kraft mehr auf den Blockiermechanismus ausübt und dass bei einer hinterschnittenen Verzahnung eine Drehung der Gurtspule zusätzlich um die Hinterschneidung der Zähne erfolgt. In vorteilhafter Weise wird eine für das Öffnen der Blockiervorrichtung indikative Größe erfasst. Die für das Öffnen der Blockiervorrichtung indikative Größe wird während der Ansteuerung des Gurtstraffers fortlaufend bewertet. Das Öffnen der Blockiervorrichtung führt dazu, dass der Gurtstraffer keine weitere Straffung zum Lösen des Gurts bewirkt. Der Gurtstraffer wird in dieser Ausgestaltung des Verfahrens in der Weise angesteuert, dass sich die Gurtspule gerade so weit in Aufwickelrichtung dreht, dass sich die Blockiervorrichtung der Gurtspule öffnet und das Gurtband zum Abwickeln freigibt und der Insasse in den Zustand mit lose angelegtem Gurt gebracht wird. Vorteil dieser Ausgestaltung ist, dass die Belastung der Insassen, welche durch die weitere Drehung der Gurtaufwickelspule bei bereits gestrafftem Gurt verursacht wird, kleinstmöglich ist.

Das Abwickeln des gestrafften Gurtbandes erfolgt in der Weise, dass ein vorhandener gurtbandsensitiver Sensor nicht bereits durch den erwünschten Abwickelvorgang bedingt, die Gurtauszugssperre auslöst. Der Insasse befindet sich nach dem Öffnen des Blockiermechanismus in angegurtetem Zustand mit lose anliegendem beziehungsweise entspanntem Sicherheitsgurt, ohne dass er selbst oder der Fahrer eine Maßnahme hat ergreifen müssen und ohne dass die Schutzwirkung des Sicherheitsgurts zu irgend einem Zeitpunkt nicht sichergestellt war.

In einer vorteilhaften Weiterbildung des Verfahrens erfolgt die Ansteuerung des Gurtstraffers in der Weise, dass bei gestrafftem Gurtband und nach dem Öffnen der Blockiervorrichtung das Drehmoment des Gurtstrafferantriebs nicht schlagartig sondern langsam abgesenkt wird. Dies geschieht in der Weise, dass der Abwickelvorgang derart erfolgt, dass der gurtbandsensitive Sensor nicht anspricht. Das langsame Absenken des Drehmoments geschieht beispielsweise indem der Motorstrom eines elektromotorischen Gurtstraffers langsam verringert wird. Hierdurch wird die Zugspannung, welche im gestrafften Gurt vorhanden ist, langsamer verringert, als dies bei einem schnellen Abschalten des Gurtstrafferantriebs geschieht. Vorteil dieser Weiterbildung ist, dass eine erneute Auslösung der Gurtauszugssperre durch das Abwickeln des Gurtbandes verhindert wird.

In einer vorteilhaften Ausführungsform wird als indikative Größe für das Öffnen der Blockiervorrichtung das Lösen der Sperrklinke von der auf der Gurtspule befindlichen Verzahnung herangezogen, welche mittels eines Schalters erfasst wird. Die Sperrklinke betätigt in Abhängigkeit ihres Zustands einen mechanischen oder elektrischen Schalter, oder ist selbst Teil eines Schalters. Es ist möglich die Sperrklinke selbst als Kontaktschalter auszuführen, wobei ein Teil der Sperrklinke aus elektrisch leitfähigem Material besteht, welches in einer vorgegebene Position der Sperrklinke einen Stromkreis schließt. Vorteil dieser Ausführungsform ist, dass der Zustand der Sperrklinke einfach und direkt überwacht werden kann.

Alternativ kann als indikative Größe die Drehung der Gurtspule oder die Drehung eines elektromotorischen Gurtstrafferantriebs herangezogen werden. Mittels des Signals eines Drehwinkelgebers wird der Drehwinkel der Gurtspule oder der Drehwinkel des elektromotorischen Antriebs erfasst, und es kann sichergestellt werden, dass die Drehung der Gurtspule durch den Gurtstraffer um ein Winkelstück erfolgt, welches mindestens so groß ist, dass die Sperrklinke des Blockiermechanismus aus der Blockierverzahnung gelöst wird. Vorteil dieser Ausführungsform ist, dass eine kontrollierte Drehung der Gurtspule um einen vorgegebenen Drehwinkel ermöglicht wird. Mit einer kontrollierten Drehung der Gurtspule ist es möglich das Öffnen des Blockiermechanismus so durchzuführen, dass der Insasse eine möglichst geringe Belastung oder Beeinträchtigung erfährt.

In einer vorteilhaften Weiterbildung des Verfahrens mit einem elektromotorisch betriebenen Gurtstraffer wird der Zustand des Blockiermechanismus dadurch erfasst, dass der Wert einer elektrischen Betriebsgröße des Elektromotors bewertet wird. Beispiele einer solchen Betriebsgröße sind der Motorstrom, die am Motor anliegende Spannung oder die vom Motor induzierte Spannung. Ist der Blockiermechanismus wirksam und der Gurt gestrafft, so zeigen Motorstrom und Motorspannung eine andere Charakteristik als bei gelöstem Blockiermechanismus mit losem Gurt, da der Motor im ersten Fall gegen ein vorhandenes hohes Drehmoment Arbeit verrichten muss. Vorteil dieser Weiterbildung des Verfahrens ist, dass kein zusätzlicher Sensor, wie ein Drehwinkelgeber oder ein Sensor für die Sperrklinkenposition erforderlich ist.

In einer vorteilhaften Weiterbildung des Verfahrens mit einem Antrieb für eine Sitzverstellung wird diese zum Öffnen der Blockiervorrichtung angesteuert. Ein Antrieb für eine Sitzverstellung kann beispielsweise eine elektrische oder pneumatische Energieversorgung aufweisen und die Ansteuerung des Antriebs erfolgt über die Regelung der Stromversorgung oder des zugeführten Luftdrucks. Ist nach einer erfolgten Gurtstraffung die Gurtauszugssperre wirksam, so kann in Abhängigkeit der Stärke der Gurtstraffung die Zugkraft im Gurt so stark sein, dass eine weitere Straffung des Gurtbandes durch den Gurtstrafferantrieb nicht zu einer Drehung mit genügend großem Drehwinkel führt, und der Blockiermechanismus wird nicht gelöst. Durch die Ansteuerung einer Sitzverstellung kann die Sitzposition dahingehend verändert werden, dass sich die Zugkraft im Gurt verringert und dass die anschließende Straffung des Gurtbandes durch den Gurtstrafferantrieb zu einem ausreichend großen Drehwinkel der Gurtspule und zu einem Öffnen des Blockiermechanismus führt. Insbesondere führen eine Absenkung der Sitzfläche, ein Verschieben des Sitzes nach hinten und ein Neigen der Sitzlehne nach hinten zu einer Entspannung des Gurtbandes. Um die Insassen möglichst wenig zu beeinträchtigen kann vorgesehen werden, die Verstellmöglichkeiten des Sitzes erst anzusteuern, falls das Öffnen der Blockiervorrichtung nach einem der Verfahren, wie sie in den vorherigen Absätzen beschrieben sind, erfolglos war.

Alternativ zur Sitzverstellung kann auch eine elektrisch oder pneumatisch angetriebene Verstelleinrichtung der Gurtumlenkrolle, welche zur Gurthöhenverstellung vorgesehen ist, derart angesteuert werden, dass zum Öffnen des Blockiermechanismus diese Gurtumlenkrolle abgesenkt wird. Vorteil dieser alternativen Ausführungsform ist, dass die Beeinträchtigung der Insassen, welche durch eine Ansteuerung der Verstelleinrichtung der Gurtumlenkrolle erfolgt, gegenüber der Beeinträchtigung wie sie bei einer Ansteuerung der Sitzverstellung vorliegt, verringert wird. Die Ansteuerung der Verstelleinrichtung der Gurtumlenkrolle kann auch immer zusätzlich zu einer Ansteuerung oder unmittelbar vor einer erfindungsgemäßen Ansteuerung des Gurtstrafferantriebs erfolgen, mit dem Ziel die Belastung der Insassen zu verringern.

Da normalerweise die Einstellungen der Sitzverstellung und der Gurtumlenkrolle so vorgenommen werden, dass sich bei kleinen Insassen die Gurtumlenkrolle weiter unten und der Sitz weiter vorne und bei großen Insassen die Umlenkrolle weiter oben und der Sitz weiter hinten befinden, kann durch eine Kombination der Ansteuerung der Gurtumlenkrolle und der Ansteuerung der Sitzverstellung stets eine Entspannung des gestrafften und blockierten Gurtbandes erreicht werden. Vorteil dieser Weiterbildung ist, dass auch bei einer Straffung mit hoher Straffkraft die Blockiervorrichtung zuverlässig geöffnet werden kann, ohne dass der Antrieb des Gurtstraffers so ausgelegt wird, dass er eine Drehmomentreserve aufweist, welche nur zum Öffnen der Blockiervorrichtung, nicht aber für den eigentlichen Straffvorgang vorgesehen ist.

Es ist auch möglich, die Gurtumlenkrolle und die Sitzverstellung entweder einzeln oder kombiniert zum Lösen des Blockiermechanismus anzusteuern, ohne dass der Gurtstrafferantrieb angesteuert wird. Dies hat den Vorteil, dass kein Gurtstraffer vorgesehen werden muss, der ein Öffnen der Blockiervorrichtung nach dem erfindungsgemäßen Verfahren erlaubt.

Es gibt nun verschiedene Möglichkeiten, die Lehre der vorliegenden Erfindung in vorteilhafter Weise auszugestalten. Nachfolgend wird eine vorteilhafte Ausführungsform des erfindungsgemäßen Verfahrens anhand der Zeichnung näher beschrieben. Es zeigen jeweils in schematischer Darstellung:
Fig. 1 ein Flussdiagramm des erfindungsgemäßen Verfahrens zur Ansteuerung eines reversiblen Gurtstraffers,
Fig. 2 eine einfache Darstellung des zeitlichen Verlaufs des Motorstroms (gestrichelt) eines elektromotorischen Gurtstraffers und des zeitlichen Verlaufs des Drehwinkels (durchgezogen) der Gurtaufwickelspule während eines Straffvorgangs,
Fig. 3 eine Darstellung eines anderen zeitlichen Verlaufs des Motorstroms (gestrichelt und strichpunktiert) eines elektromotorischen Gurtstraffers und des zeitlichen Verlaufs des Drehwinkels (durchgezogen) der Gurtaufwickelspule während eines Straffvorgangs,
Fig. 4 eine Darstellung des zeitlichen Verlaufs des Motorstroms in einer vorteilhaften Weiterbildung des Verfahrens,
Fig. 5 eine Sperrklinke und eine Blockierverzahnung der Gurtspule bei nicht wirksamer Gurtauszugssperre,
Fig. 6 eine Sperrklinke und eine Blockierverzahnung der Gurtspule bei wirksamer Gurtauszugssperre.

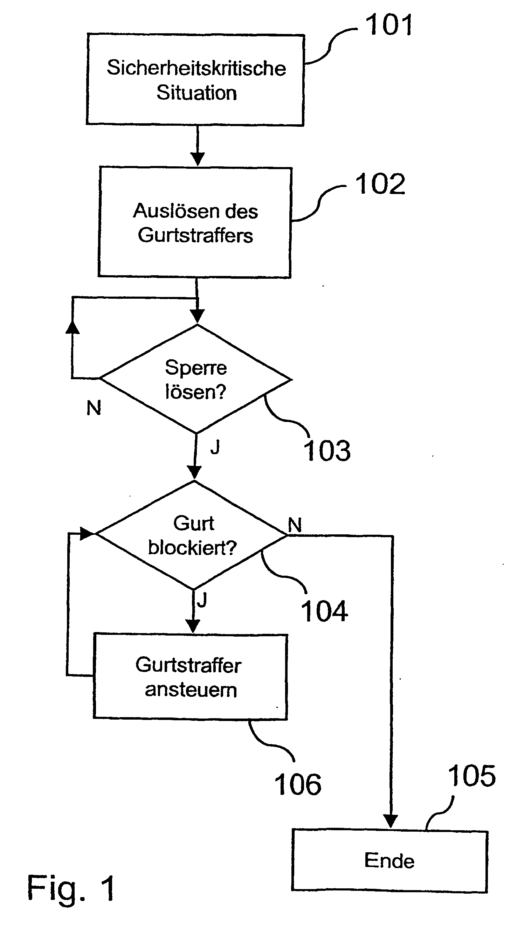

Die Fig. 1 zeigt ein Flussdiagramm des erfindungsgemäßen Verfahrens zur Ansteuerung eines reversiblen Gurtstraffers. In Schritt 101 wird im Kraftfahrzeug von einem Gefahrenrechner oder von einem Steuergerät, beispielsweise vom BAS(BremsASsistent)-Steuergerät, vom DTR(DisTRonic=Abstandsregeltempomat)-Steuergerät oder vom ESP(Elektronisches Stabilitäts Programm)-Steuergerät eine sicherheitskritische Situation erkannt und hierdurch in Schritt 102 das Auslösen des Gurtstraffers veranlasst. Nachdem in Schritt 102 der Gurtstraffer ausgelöst wurde und nachdem der Gurtstraffvorgang beendet ist wird in Schritt 103 geprüft ob eine vorgegebene Bedingung erfüllt ist, welche dazu führt, dass die Gurtauszugssperre gelöst werden soll. Eine solche Bedingung kann mit der Abfrage eines Steuergeräts oder eines Gefahrenrechners verknüpft sein. Beispielsweise kann abgefragt werden, ob die für das Auslösen des Gurtstraffers ursächliche sicherheitskritische Situation nicht mehr gegeben ist. In Schritt 103 kann auch ein einfaches zeitliches Kriterium abgefragt werden, beispielsweise ob eine vorgegebene Zeitdauer überschritten ist.

Das Erkennen einer sicherheitskritischen Situation in Schritt 102 erfolgt durch ein Bremsassistenzsteuergerät beispielsweise anhand der Geschwindigkeit, mit welcher das Bremspedal betätigt wird. Ab einer vorgegebenen Betätigungsgeschwindigkeit wird auf eine Gefahrensituation geschlossen und ein Aktivierungssignal für eine Vollbremsung ausgegeben. Dieses Aktivierungssignal für eine Vollbremsung wird auch als Auslösesignal zur Auslösung des Gurtstraffers herangezogen. Wird vom Bremsassistenzsteuergerät erkannt, dass die sicherheitskritische Situation - das heißt die für das Auslösen des Gurtstraffers ursächliche Situation - nicht mehr gegeben ist, beispielsweise weil erfasst wird, dass das Bremspedal gelöst wird, so wird das Aktivierungssignal für die Vollbremsung nicht mehr ausgegeben und die Vollbremsung beendet. Der Wegfall dieses Aktivierungssignals führt im erfindungsgemäßen Verfahren zur Verzweigung nach Schritt 104 oder alternativ hierzu direkt zur Verzeigung nach Schritt 106 und der Ansteuerung des Gurtstraffers zum Lösen der Blockiervorrichtung (Blockiermechanismus, z.B. gebildet aus Sperrklinke und komplementärer Verzahnung auf der Gurtspule). Anstelle des Bremsassistenzsystems kann das Auslösesignal für den Gurtstraffer auch ein Aktivierungssignal für einen Fahrdynamikeingriff sein, welches von einem Fahrdynamikregelsystem ausgegeben wird.

In einer weiteren alternativen Ausgestaltung wird als vorgebbare Bedingung für die Ansteuerung des Gurtstraffers zum Lösen der Blockiervorrichtung in Schritt 103 eine Wartezeit T₀ vorgegeben, welche im Anschluss an den Wegfall des Aktivierungssignals für das Bremsassistenzsystem oder das Fahrdynamikregelsystem abgewartet wird, bis der Gurtstraffer zum Lösen der Blockiervorrichtung in Schritt 106 angesteuert oder bis die Abfrage in Schritt 104 durchgeführt wird. Die Wartezeit T₀ bewirkt, dass die Ansteuerung des Gurtstraffers zum Lösen der Blockiervorrichtung erst dann erfolgt, wenn das Fahrzeug einen Zustand erreicht hat, in welchem der fahrzeugsensitive Sensor der Gurtauszugssperre diese nicht wirksam macht. Beispielsweise schwingt nach einer Vollbremsung, welche bis zum Stillstand des Fahrzeugs erfolgt, das Fahrzeug nach dessen Stillstand noch für eine kurze Zeit (max. ca. 1s), wobei bei diesem Schwingen Beschleunigungen am Fahrzeug auftreten können, welche dazu führen, dass der fahrzeugsensitive Sensor, welcher bei einer Beschleunigung von ca. 0,3 g - 0,5 g anspricht, das Lösen der Blockiervorrichtung verhindert bzw. diese erneut wirksam macht. Die Wartezeit T₀ bewirkt, dass das Ansteuern des Gurtstraffers zum Öffnen der Blockiervorrichtung erst dann erfolgt, wenn diese auch geöffnet werden kann, das heißt wenn der fahrzeugsensitive Sensor nicht anspricht. Die Wartezeit T₀ kann eine Funktion sein, welche von einem oder verschieden Parametern wie beispielsweise einem Bremsassistenzsignal, einem Bremsregelsignal, einer Längs- oder Querbeschleunigung, der Fahrzeuggeschwindigkeit oder dem Lenkwinkel abhängt.

Ist die Bedingung in Schritt 103 erfüllt, dann wird in Schritt 104 geprüft, ob der Blockiermechanismus der Gurtspule wirksam ist. Ist der Blockiermechanismus nicht wirksam, das heißt der Gurt ist nicht blockiert und der Insasse kann sich, wie vor der sicherheitskritischen Situation, frei im Rahmen des abwickelbaren Gurts bewegen, so ist das Verfahren in Schritt 105 beendet.

Ergibt die Abfrage in Schritt 104, dass der Blockiermechanismus wirksam und der Gurt blockiert ist, so wird in Schritt 106 der Gurtstraffer erneut für eine vorgegebene Zeit angesteuert, um die Gurtspule ein Winkelstück in Aufwickelrichtung zu drehen und somit die Sperrklinke des Blockiermechanismus freizugeben. Hierbei sollen die Insassen, insbesondere der Fahrer, durch die weitere Straffung des Gurts, welche zum Zweck des Lösens des Blockiermechansimus erfolgt, nicht irritiert oder belastet werden. Aus diesem Grund erfolgt die Ansteuerung des Gurtstraffers in Schritt 106 im Vergleich zur Gurtstraffung in Schritt 102 mit veränderter Stärke und/oder der zeitliche Verlauf der Straffung ist geeignet verändert. Ein erneuter Eingriff der Sperrklinke in die Blockierverzahnung kann dadurch verhindert werden, dass eine Entlastung des gestrafften Gurts von der wirksamen Zugkraft durch ein Abwickeln eines Teils des Gurtbandes von der Gurtaufwickelrolle mittels einer vorgegebenen Abschaltcharakteristik des Gurtstrafferantriebs erfolgt. Diese Abschaltcharakteristik muss in der Weise vorgegeben sein, dass das Gurtband so abgewickelt wird, dass ein Ansprechen des gurtbandsensitiven Sensors verhindert wird. Ist ein Drehwinkelgeber an der Gurtspule oder einem elektromotorischen Gurtstrafferantrieb vorhanden, so kann mittels diesem das Abwickeln des Gurtbandes kontrolliert und die Abschaltcharakteristik angepasst werden.

Das erfindungsgemäße Verfahren zur Verwendung eines Gurtstraffers wird derart durchgeführt, dass es jederzeit abgebrochen werden kann. Ein auslösendes Ereignis für den Abbruch des Verfahrens ist beispielsweise das Öffnen des Gurtschlosses.
Hierdurch wird verhindert, dass beim oder nach dem Öffnen des Gurtschlosses der Gurt eingezogen wird und der Insasse hierdurch eine Beeinträchtigung erfährt. Wird von einem Steuergerät oder einem Gefahrenrechner während der Durchführung des Verfahrens erneut eine sicherheitskritische Situation erkannt und das laufende Verfahren befindet sich in Schritt 103 oder einem späteren Schritt, so wird das Verfahren ebenfalls abgebrochen. Es kann sofort mit Schritt 101 neu gestartet und gegebenenfalls eine Gurtstraffung in Schritt 102 ausgelöst werden. Hierdurch wird eine ununterbrochene Schutzwirkung des Gurtsystems sichergestellt.

In einer alternativen Ausgestaltung des Verfahrens ist es möglich die Schritte 103 und 104 zu vertauschen, so dass zuerst ermittelt wird, ob die Gurtauszugssperre wirksam ist. Anschließend wird die Bedingung, welche für das Öffnen der Sperre erfüllt sein muss, abgefragt. Es ist auch möglich die beiden Abfragen 103 und 104 parallel vorzunehmen.

Auf die Abfrage einer Bedingung zum Lösen der Gurtauszugssperre in Schritt 103 kann in einer vereinfachten Abwandlung des Verfahrens auch verzichtet werden.

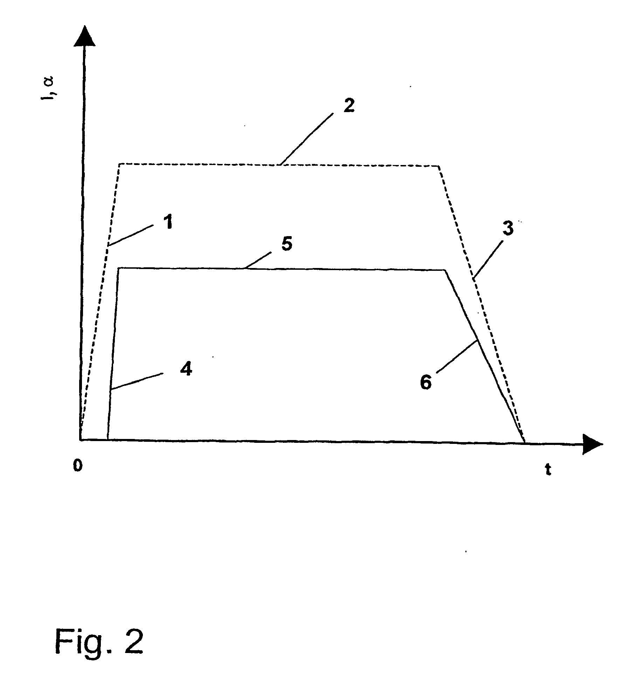

Die Fig. 2 zeigt eine einfache Darstellung des zeitlichen Verlaufs des Motorstroms I eines elektromotorischen Gurtstraffers und des zeitlichen Verlaufs des Drehwinkels α der Gurtaufwickelspule während eines Straffvorgangs. Auf der Ordinate wird der Motorstrom I in Form einer gestrichelten Kurve und der Drehwinkel α in Form einer durchgezogenen Kurve gegen die Zeit t aufgetragen. Nach dem Auslösen des elektromotorischen Gurtstraffers bei t=0 steigt der Motorstrom an (Kurvenabschnitt 1). Ist ein genügend großes Drehmoment erreicht, beginnen sich der Motor und die daran mechanisch gekoppelte Gurtspule zu drehen (Kurvenabschnitt 4) bis der Gurt so weit gespannt ist, dass sich ein Gleichgewicht zwischen dem Drehmoment des Motors und dem entgegen wirkenden Drehmoment der Gurtaufwickelrolle einstellt. Ab dem Zeitpunkt des Momentengleichgewichts bleiben der Drehwinkel des Motors und der Motorstrom konstant (Kurvenabschnitt 5 und 2). Nach einer vorgegebenen Zeit, oder nachdem festgestellt wurde, dass sich die Blockiervorrichtung gelöst hat, wird die Stromversorgung des Motors heruntergeregelt, und der Motorstrom fällt auf Null ab (Kurvenabschnitt 3). Gleichzeitig wird der Gurt entspannt, und für den Fall, dass die Gurtauszugssperre nicht wirksam ist, wird der Motor wieder zurück gedreht (Kurvenabschnitt 6). Ein Zurückdrehen des Gurtstraffermotors kann verhindert werden, wenn zwischen dem Gurtstraffermotor und der Gurtspule eine Kupplung vorgesehen ist. Hierzu wird eine ansteuerbare Kupplung in der Weise angesteuert, dass sich die Gurtspule entkoppelt vom Gurtstraffermotor zurückdreht. Es kann auch eine Kupplung verwendet werden, welche automatisch den Gurtstraffermotor von der Gurtspule trennt, falls der Motor kein Drehmoment in Aufwickelrichtung erzeugt. Ein weiterer Kupplungstyp löst den Kraftschluß zwischen Antrieb und Gurtspule, indem der Antrieb kurzzeitig in Abwickelrichtung angesteuert wird, also entgegen seiner eigentlichen Arbeitsrichtung.

In der Darstellung der Fig. 2 sind die auftretenden Schwankungen des Motorstroms nicht berücksichtigt. Sind die Schwankungen des Motorstroms so groß, dass der Drehwinkel der Gurtspule sich ändert, so ist der Motorstrom nachzuregeln.

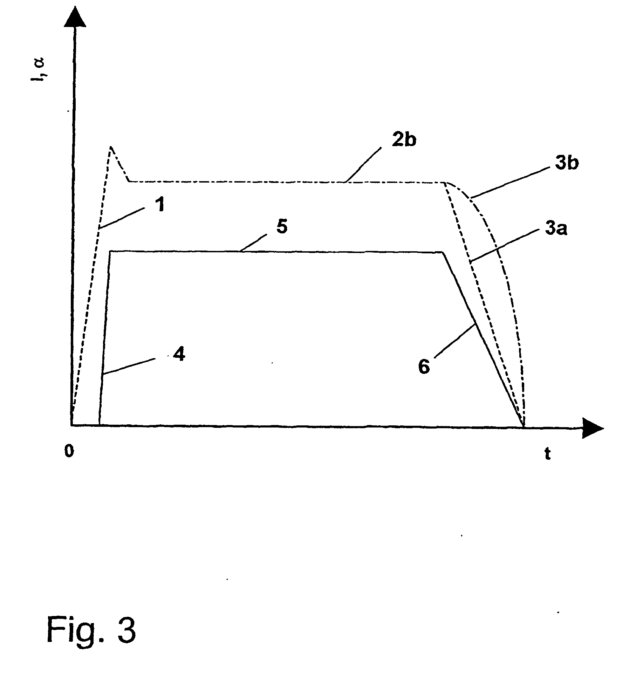

Die Fig. 3 zeigt eine weitere Darstellung des zeitlichen Verlaufs des Motorstroms I eines elektromotorischen Gurtstraffers und des zeitlichen Verlaufs des Drehwinkels α der Gurtaufwickelspule während eines Straffvorgangs. Der Motorstrom I wird in Form einer gestrichelten und einer strichpunktierten Kurve gegen die Zeit t aufgetragen. Nach dem Auslösen des elektromotorischen Gurtstraffers bei t=0 steigt der Motorstrom an (Kurvenabschnitt 1). Ist ein genügend großes Drehmoment erreicht, beginnen sich der Motor und die daran mechanisch gekoppelte Gurtspule zu drehen (Kurvenabschnitt 4) bis der Gurt so weit gespannt ist, dass sich ein Gleichgewicht zwischen dem Drehmoment des Motors und dem entgegen wirkenden Drehmoment der Gurtaufwickelrolle einstellt. Um den Motor und die Gurtspule in der erreichten Position zu halten, kann der Motorstrom etwas abgesenkt und auf dem verringerten Niveau gehalten werden (Kurvenabschnitt 2b), da ein Teil des erzeugten Drehmoments in Aufwickelrichtung zur Überwindung der Reibungskräfte nötig ist, welche beispielsweise an der Gurtumlenkrolle auftreten. Eine solche Charakteristik tritt insbesondere dann auf, wenn der Strom in Abhängigkeit der Winkellage des Motors oder in Abhängigkeit der Winkellage der Gurtspule geregelt wird. Nach einer vorgegebenen Zeit oder nachdem festgestellt wurde, dass sich die Blockiervorrichtung gelöst hat, wird die Stromversorgung des Motors heruntergeregelt (Kurvenabschnitte 3a und 3b).

Das Herunterregeln des Motorstroms kann eine lineare (Kurvenabschnitt 3a) oder eine nichtlineare (Kurvenabschnitt 3b) Charakteristik aufweisen und muss derart erfolgen, dass das Abwickeln des Gurtbandes von der Gurtaufwickelrolle nicht zum Auslösen der Gurtauszugssperre durch den gurtbandsensitiven Sensor führt. Hierfür ist ein flacherer Abfall des Stroms zu Beginn des Abwickelvorgangs und ein steilerer Abfall zu dessen Ende besonders geeignet (Kurvenabschnitt 3b). Das Zurückdrehen des Motors (Kurvenabschnitt 6) durch das Abwickeln des Gurtbandes von der Gurtaufwickelrolle erfolgt abhängig vom Stromverlauf (Kurvenabschnitte 3a und 3b) und ist hier beispielhaft linear angegeben.

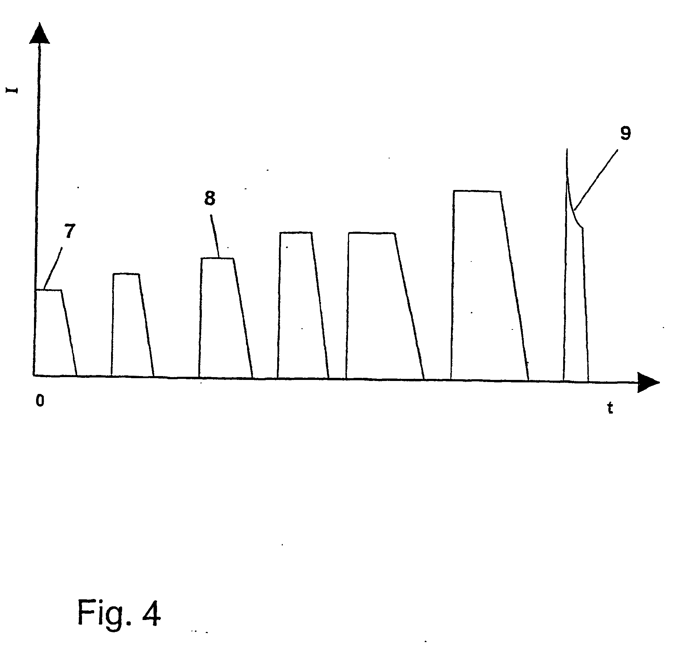

Die Strom-, Winkel- und Zeitverhältnisse in den Figuren 3 und 4 sind idealisiert dargestellt und quantitativ nicht den tatsächlichen Verläufen angepasst.

Die Fig. 4 zeigt eine Darstellung des zeitlichen Verlaufs des Motorstroms in einer vorteilhaften Weiterbildung des Verfahrens. In dieser Weiterbildung des Verfahrens wird aus dem zeitlichen Verlauf des Motorstroms I eine Aussage über den Zustand des Blockiermechanismus abgeleitet. Der Motor wird derart angesteuert, dass hintereinander eine Reihe kurzer pulsartiger Ansteuerungen 7, 8, 9 des Gurtstraffermotors durchgeführt werden, wobei bei jeder Ansteuerung der Gurtstraffermotor ein Drehmoment erzeugt, welches auf die Gurtspule derart wirkt, dass die Gurtaufwickelrolle eine Zugkraft im abgewickelten Teil des Gurtbandes erzeugt. Die Stromstärke I der Ansteuerungen 7, 8, 9 wird iterativ bei jeder Ansteuerung erhöht, wobei der zeitliche Verlauf der Stromstärke I während jeder Ansteuerung erfasst wird. Alternativ kann auch bei konstanter Stromstärke I die Dauer der pulsartigen Ansteuerungen iterativ erhöht werden, oder es werden sowohl die Stromstärke I als auch die Dauer der Ansteuerungen erhöht. Ist der Gurt gestrafft und die Gurtauszugssperre wirksam, so bewirkt das vom Gurtstraffermotor erzeugte Drehmoment ein äußerst geringes Aufwickeln des Gurtbandes auf die Gurtaufwickelrolle. Bei diesem geringen Aufwickeln findet auch nur eine sehr geringe Drehung des Gurtstraffermotors statt. Dies bewirkt, dass die Stromstärke I nach einem schnellen Anstieg nahezu konstant verläuft 7 und 8, ebenso wie im Bereich 2 in Fig. 2. Wird durch eine solche Ansteuerung des Gurtstraffermotors die Gurtspule soweit gedreht, dass sich die Sperrklinke von der Sperrverzahnung lösen kann, so wird ein Teil des aufgewickelten Gurtbandes abgerollt und an der Gurtaufwickelrolle liegt kein Drehmoment mehr an. Wird bei einer erneuten Ansteuerung des Gurtstraffermotors ein Drehmoment an der Gurtspule in Aufwickelrichtung erzeugt, so kann sich diese sehr schnell drehen und der Stromverlauf zeigt eine steil fallende Flanke 9. Tritt eine solche schnell fallende Flanke 9 der Stromstärke I während einer Ansteuerung auf, wird die Ansteuerung abgebrochen und das Verfahren wird beendet, da die Gurtauszugssperre nun nicht mehr wirksam ist. Durch diese Weiterbildung des Verfahrens wird erreicht, dass mittels des reversiblen Gurtstraffermotors die Gurtspule iterativ ansteigend, gerade um einen so großen Winkel gedreht wird, welcher mindestens erforderlich ist, dass sich die Sperrklinke aus der Verzahnung der Gurtspule lösen und das Gurtband freigeben kann. Stromanstieg und Stromabfall wird wieder derart gesteuert, dass keine Auslösung der Gurtauszugssperre durch den gurtbandsensitiven Sensor erfolgt.

Die Beschreibungen der Figuren 2, 3 und 4 beziehen sich auf eine Ausführungsform des Verfahrens bei einem reversiblen Gurtstraffers mit einem elektromotorischen Antrieb. Die hierbei beschriebene Ansteuerung des Gurtstrafferantriebs kann auch auf einen pneumatischen oder hydraulischen und teilweise auf einen federkraftgetriebenen Gurtstraffer übertragen werden. Hierbei ist beispielsweise bei einem pneumatischen Antrieb der elektrische Strom in den Figurenbeschreibungen durch den Luftdruck zu ersetzen.

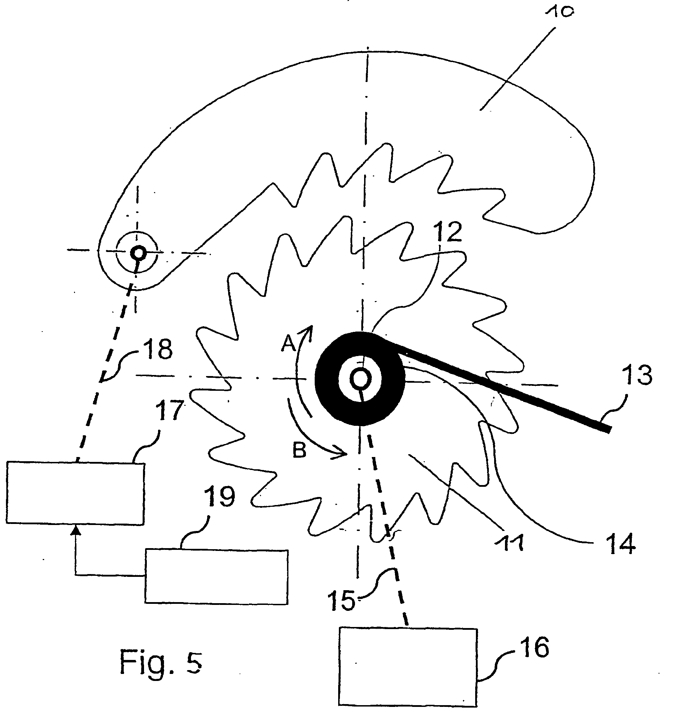

Die Fig. 5 zeigt eine drehbar befestigte Sperrklinke 10 und eine Blockierverzahnung 11 bei nicht wirksamer Gurtauszugssperre. Die Blockierverzahnung 11 ist mechanisch starr auf einer Gurtspule 12 angeordnet. Die Sperrklinke 10 ist von der Blockierverzahnung 11 gelöst, wodurch die Gurtspule 12 frei drehbar ist und das Gurtband 13 gegen das Moment der Rückholfeder von der Gurtaufwickelrolle 14 in Abwickelrichtung A abgewickelt werden kann. Im Normalbetrieb des Fahrzeugs ist dies die übliche Position der Sperrklinke 10, in welche diese beispielsweise durch einen Federmechanismus oder einen Magneten gebracht wird. Die Gurtspule 12 weist eine mechanische Verbindung 15 zu einem Gurtstrafferantrieb 16 auf, welcher die Gurtspule 12 in Aufwickelrichtung B dreht. Eine Ansteuerung der Sperrklinke erfolgt durch eine Ansteuervorrichtung 17, welche eine mechanische Verbindung 18 zur Sperrklinke 10 aufweist. Das Signal eines Sensors 19 wird an die Ansteuervorrichtung 17 geleitet und löst dort gegebenenfalls die Ansteuerung der Sperrklinke 10 aus. Der Sensor 19 kann beispielsweise ein gurtbandsensitiver Fliehkraftsensor, ein Sensor zur Erkennung einer Gefahrensituation, wie beispielsweise ein Fahrdynamiksensor oder ein Sensor zur Erkennung einer Unfallsituation wie beispielsweise ein Beschleunigungssensor sein.

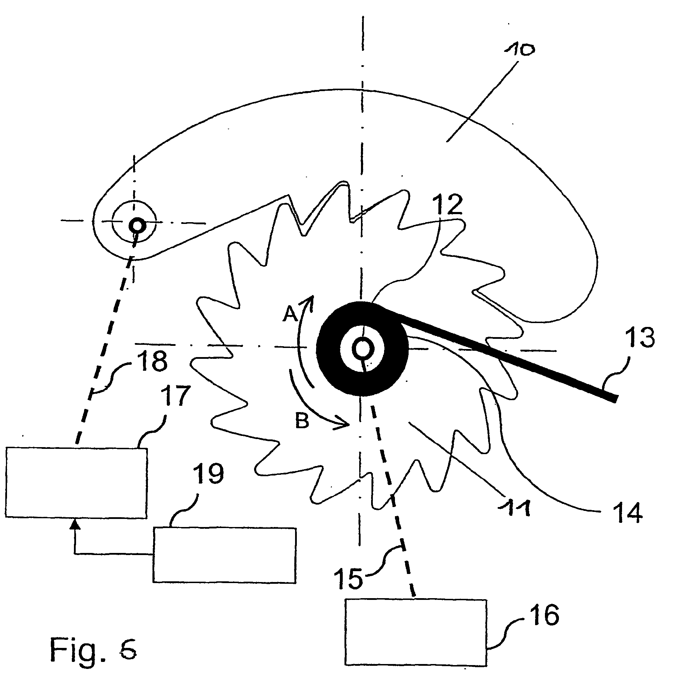

Die Fig. 6 zeigt eine drehbar befestigte Sperrklinke 10 und eine Blockierverzahnung 11 der Gurtspule 12 bei wirksamer Gurtauszugssperre. In die dargestellte Position wird die Sperrklinke 10 gebracht, falls das Signal eines Sensors 19 die Ansteuerung des Blockiermechanismus durch die Ansteuervorrichtung 17 bewirkt. Wegen des Hinterschnitts der Verzahnungen an der Sperrklinke 10 und der Blockierverzahnung 11 ist ein selbsttätiges Lösen der Sperrklinke 10 von der Blockierverzahnung 11 nicht möglich, solange sich die Gurtspule 12 mit der Blockierverzahnung 11 unter der Einwirkung eines Drehmoments in Gurtabwickelrichtung A befindet. Ein solches Drehmoment wird durch eine Zugkraft im Gurtband 13 verursacht.

Die Durchführung des erfindungsgemäßen Verfahrens ist für den Fall eines heute üblichen Blockiermechanismus der Gurtauszugssperre beschrieben, bei welchem eine Sperrklinke mit einer komplementären Verzahnung auf der Gurtspule zusammenwirkt. Diese Darstellung des Blockiermechanismus ist beispielhaft gewählt. Das Verfahren kann auch durchgeführt werden, falls der Blockiermechanismus der Gurtauszugssperre vollkommen anders ausgeführt ist, beispielsweise falls er keine ineinandergreifende Verzahnung aufweist, sondern aus einem mechanisch oder elektromagnetisch ansteuerbaren Zapfen besteht, welcher in ein vorgesehene Stelle eingreift und hierdurch die Gurtauszugssperre wirksam macht. Die Gurtauszugssperre kann auch aus einer innenliegenden Sperrklinke mit Aussenverzahnung und einer komplementären Innenverzahnung, welche fest mit der Gurtspule verbunden ist, bestehen.

Ist im Fahrzeug zusätzlich zu dem einen, auf die Gurtspule wirkenden, reversiblen Gurtstraffer ein weiterer Gurtstraffer vorgesehen, welcher beispielsweise pyrotechnisch ausgelöst wird, so kann das Verfahren in der beschriebenen Form, unabhängig von diesem weiteren Gurtstraffer durchgeführt werden, wobei dieser weitere Gurtstraffer auch an einer anderen Stelle als der Gurtspule, zum Beispiel am Gurtschloss wirksam sein kann.

Ist im Kraftfahrzeug ein Gurtstraffer vorgesehen, welcher nicht an der Gurtspule wirkt, sondern beispielsweise das Gurtschloß bewegt um den Gurt zu straffen, so ist zur erfindungsgemäßen Durchführung des Verfahrens eine Antriebsvorrichtung nötig, welche auf die Gurtspule wirkt. Diese Antriebsvorrichtung ist auch als Gurtstraffer zu bezeichnen. Ein solcher, auf die Gurtspule wirkender Gurtstraffer kann auch einzig dafür vorgesehen sein, die Blockiervorrichtung der Gurtauszugssperre zu öffnen.

## Patentansprüche

1. Verfahren zur Ansteuerung eines reversiblen Gurtstraffers zum Straffen eines sich um eine Gurtspule abwickelnden Gurtbandes eines Sicherheitsgurts in einem Kraftfahrzeug wobei
- der Gurtstraffer einen auf die Gurtspule wirkenden Antrieb aufweist,
- der Sicherheitsgurt als Gurtauszugssperre eine auf die Gurtspule in Abwickelrichtung wirkende Blockiervorrichtung (10, 11) aufweist,
- nach dem Auslösen des Gurtstraffers, und bei Vorliegen einer vorgegebenen Bedingung, der Gurtstraffer in der Weise angesteuert wird, dass sich die Gurtspule (12) in Aufwickelrichtung (B) dreht, damit sich die Blockiervorrichtung (10, 11) der Gurtspule (12) öffnet und das Gurtband (13) zum Abwickeln freigibt,
**dadurch gekennzeichnet, dass**
- eine für das Öffnen der Blockiervorrichtung (10, 11) indikative Größe erfasst wird und
- der Gurtstraffer in der Weise angesteuert wird, dass sich die Gurtspule (12) gerade soweit dreht, dass sich die Blockiervorrichtung (10, 11) der Gurtspule (12) öffnet und das Gurtband (13) zum Abwickeln freigibt.

2. Verfahren nach Anspruch 1, **dadurch gekennzeichnet, dass** die Blockiervorrichtung (10, 11) der Gurtspule (12) eine drehbar befestigte Sperrklinke (10) mit einer Verzahnung aufweist, welche mit einer komplementären Verzahnung (11) auf der Gurtspule (12) zusammenwirkt, wobei die beiden Verzahnungen bei wirksamer Gurtauszugssperre ineinander greifen.

3. Verfahren nach Anspruch 2, **dadurch gekennzeichnet, dass** das Öffnen der Blockiervorrichtung (10, 11), durch das Lösen der Sperrklinke (10) von der auf der Gurtspule (12) befindlichen Verzahnung (11), mittels eines Schalters erfasst wird.

4. Verfahren nach Anspruch 3, **dadurch gekennzeichnet, dass** das Lösen der Sperrklinke (10) von der auf der Gurtspule (12) befindlichen Verzahnung (11), mittels eines Stromkreises erfasst wird, welcher in einer vorgegebenen Position der Sperrklinke (10) durch einen aus elektrisch leitfähigem Material bestehenden Teil der Sperrklinke (10) geschlossen wird.

5. Verfahren nach Anspruch 1, **dadurch gekennzeichnet, dass** der Drehwinkel der Drehung der Gurtspule (12) mittels eines Drehwinkelgebers erfasst wird, und dass aus dem Drehwinkel auf das Öffnen der Blockiervorrichtung (10, 11) geschlossen wird.

6. Verfahren nach Anspruch 1, **dadurch gekennzeichnet, dass** der Gurtstraffer einen elektromotorischen Antrieb aufweist und dass der Wert einer elektrischen Betriebsgröße des elektromotorischen Antriebs des Gurtstraffers während der Ansteuerung des Gurtstraffers erfasst wird und mittels dieses Wertes die Aussage abgeleitet wird, ob die Gurtauszugssperre wirksam ist.

7. Verfahren nach Anspruch 1, **dadurch gekennzeichnet, dass** der Gurtstraffer einen elektromotorischen Antrieb aufweist, der Drehwinkel dieses elektromotorischen Antriebs erfasst wird und der Gurtstraffer derart angesteuert wird, dass das Drehmoment des Gurtstrafferantriebs so lange erhöht wird bis ein vorgegebener Drehwinkel erreicht ist.

8. Verfahren zur Ansteuerung eines reversiblen Gurtstraffers zum Straffen eines sich um eine Gurtspule abwickelnden Gurtbandes eines Sicherheitsgurts in einem Kraftfahrzeug, insbesondere nach einem der vorangehenden Ansprüche, wobei
- der Gurtstraffer einen auf die Gurtspule wirkenden Antrieb aufweist,
- der Sicherheitsgurt als Gurtauszugssperre eine auf die Gurtspule in Abwickelrichtung wirkende Blockiervorrichtung (10, 11) aufweist,
- nach dem Auslösen des Gurtstraffers, und bei Vorliegen einer vorgegebenen Bedingung, der Gurtstraffer in der Weise angesteuert wird, dass sich die Gurtspule (12) in Aufwickelrichtung (B) dreht, damit sich die Blockiervorrichtung (10, 11) der Gurtspule (12) öffnet und das Gurtband (13) zum Abwickeln freigibt,
**dadurch gekennzeichnet, dass**
die Ansteuerung des Gurtstraffers in der Weise erfolgt, dass bei gestrafftem Gurtband (13) und nach dem Öffnen der Blockiervorrichtung (10, 11) das Drehmoment des Gurtstrafferantriebs so langsam abgesenkt wird, dass ein gurtbandsensitiver Sensor nicht die Auslösung der Gurtauszugssperre bewirkt.

9. Verfahren zur Ansteuerung eines reversiblen Gurtstraffers zum Straffen eines sich um eine Gurtspule abwickelnden Gurtbandes eines Sicherheitsgurts in einem Kraftfahrzeug, insbesondere nach einem der vorangehenden Ansprüche, wobei
- der Gurtstraffer einen auf die Gurtspule wirkenden Antrieb aufweist,
- der Sicherheitsgurt als Gurtauszugssperre eine auf die Gurtspule in Abwickelrichtung wirkende Blockiervorrichtung (10, 11) aufweist,
- nach dem Auslösen des Gurtstraffers, und bei Vorliegen einer vorgegebenen Bedingung, der Gurtstraffer in der Weise angesteuert wird, dass sich die Gurtspule (12) in Aufwickelrichtung (B) dreht, damit sich die Blockiervorrichtung (10, 11) der Gurtspule (12) öffnet und das Gurtband (13) zum Abwickeln freigibt,
**dadurch gekennzeichnet, dass**
zur Unterstützung der Öffnung der Blockiervorrichtung durch die Ansteuerung des Gurtstraffers ein Antrieb für eine Verstelleinrichtung eines Sitzes oder einer Gurtumlenkrolle derart angesteuert wird, dass sich die Zugkraft im Gurt verringert und sich die Blockiervorrichtung (10, 11) durch die Ansteuerung des Gurtstrafferantriebs öffnen lässt.

10. Verfahren nach Anspruch 1, **dadurch gekennzeichnet, dass** als vorgebbare Bedingung für die Ansteuerung des Gurtstraffers zum Lösen der Blockiervorrichtung (10, 11) der Wegfall des die Auslösung des Gurtstraffers bewirkenden Signals vorgegeben wird.

11. Verfahren nach einem der Ansprüche 1 oder 10, **dadurch kennzeichnet, dass** als vorgebbare Bedingung für die Ansteuerung des Gurtstraffers zum Lösen der Blockiervorrichtung (10, 11) der Wegfall eines Aktivierungssignals für ein Bremsassistenz- oder ein Fahrdynamikregelsystem vorgegeben wird.

12. Verfahren nach Anspruch 1, **dadurch gekennzeichnet, dass** als vorgebbare Bedingung für die Ansteuerung des Gurtstraffers zum Lösen der Blockiervorrichtung (10, 11) eine Wartezeit T₀ im Anschluss an den Wegfall des die Auslösung des Gurtstraffers bewirkenden Signals vorgegeben ist, nach deren Ablauf der Gurtstraffer zum Lösen der Blockiervorrichtung (10, 11) angesteuert wird.

13. Verfahren nach einem der Ansprüche 1 oder 12, **dadurch gekennzeichnet, dass** bei der Ansteuerung des Gurtstraffers zum Öffnen der Blockiervorrichtung (10, 11) die Regelung des Motorstroms zum Halten der Gurtspule in einer vorgebbaren Position so lange erfolgt, bis festgestellt wird, dass sich die Blockiervorrichtung (10, 11) geöffnet hat.

## Claims

1. Method for the control of a reversible belt tensioner for tightening a belt strap of a safety belt that winds itself around a belt spool in a motor vehicle, such that
- the belt tensioner comprises a drive mechanism that acts upon the belt spool,
- the safety belt comprises as a belt pull-out stop a locking device (10, 11) that acts on the belt spool in the unwinding direction,
- when the belt tensioner has been actuated and when a specified condition is satisfied, the belt tensioner is controlled in such manner that the belt spool(12) rotates in the winding-in direction (B) until the locking device (10, 11) releases the belt spool (12) and frees the belt strap (13) to be let out,
**characterised in that**
- a dimension indicative for the release of the locking device (10, 11) is detected, and
- the belt tensioner is actuated in such manner that the belt spool (12) rotates just far enough for the locking device (10, 11) to release the belt spool (12) and free the belt strap (13) to be let out.

2. Method according to Claim 1, **characterised in that** the locking device (10, 11) of the belt spool (12) comprises a toothed locking ratchet (10) attached so that it can swivel, which co-operates with a complementary tooth array (11) on the belt spool (12), the respective teeth engaging with one another when the belt pull-out stop is active.

3. Method according to Claim 2, **characterised in that** the release of the locking device (10, 11) by disengagement of the locking ratchet (10) from the tooth array (11) on the belt spool (12) is detected by means of a switch.

4. Method according to Claim 3, **characterised in that** the disengagement of the locking ratchet (10) from the tooth array (11) on the belt spool (12) is detected by means of an electric circuit which, in a predetermined position of the locking ratchet (10), is closed by part of the locking ratchet (10) that is made from an electrically conductive material.

5. Method according to Claim 1, **characterised in that** the rotation angle through which the belt spool (12) turns is detected by a rotation angle indicator, and the release of the locking device (10, 11) is deduced from the said rotation angle.

6. Method according to Claim 1, **characterised in that** the belt tensioner is driven by an electric motor, and the value of an electric operating parameter of the electric motor drive of the belt tensioner is detected during the actuation of the belt tensioner and, from this value, the fact of whether the belt pull-out stop is active is deduced.

7. Method according to Claim 1, **characterised in that** the belt tensioner is driven by an electric motor, the rotation angle of this electric motor drive is detected, and the belt tensioner is controlled in such manner that the torque of the belt tensioner's drive is increased until a specified rotation angle is reached.

8. Method for the control of a reversible belt tensioner for tightening a belt strap of a safety belt that winds itself around a belt spool in a motor vehicle, in particular according to any of the preceding claims, such that
- the belt tensioner comprises a drive mechanism that acts upon the belt spool,
- the safety belt comprises, as a belt pull-out stop, a locking device (10, 11) that acts on the belt spool in the unwinding direction,
- when the belt tensioner has been actuated and when a specified condition is satisfied, the belt tensioner is controlled in such manner that the belt spool (12) rotates in the winding-in direction (B) until the locking device (10, 11) releases the belt spool (12) and frees the belt strap (13) to be let out,
**characterised in that**
the belt tensioner is controlled in such manner that when the belt strap (13) is tight and once the locking device (10, 11) has been released, the torque of the belt tensioner's drive is reduced slowly enough for the belt pull-out stop not to be actuated by a belt-strap-sensitive sensor.

9. Method for the control of a reversible belt tensioner for tightening a belt strap of a safety belt that winds itself around a belt spool in a motor vehicle, in particular according to any of the preceding claims, such that
- the belt tensioner comprises a drive mechanism that acts upon the belt spool,
- the safety belt comprises, as a belt pull-out stop, a locking device (10, 11) that acts on the belt spool in the unwinding direction,
- when the belt tensioner has been actuated and when a specified condition is satisfied, the belt tensioner is controlled in such manner that the belt spool (12) rotates in the winding-in direction (B) so that the locking device (10, 11) releases the belt spool (12) and frees the belt strap (13) to be let out,
**characterised in that**
to support the release of the locking device by the actuation of the belt tensioner, a drive for an adjustment device of a seat or a belt deflector roll is actuated in such manner that the tension in the belt is reduced and the locking device (10, 11) can be released by the actuation of the belt tensioner's drive.

10. Method according to Claim 1, **characterised in that** as the specifiable condition for the actuation of the belt tensioner to release the locking device (10, 11), the cessation of the signal that brings about the actuation of the belt tensioner is specified.

11. Method according to either of Claims 1 or 10, **characterised in that** as the specifiable condition for the actuation of the belt tensioner to release the locking device (10, 11), the cessation of an actuation signal for a brake assistance or a driving dynamics control system is specified.

12. Method according to Claim 1, **characterised in that** as the specifiable condition for the actuation of the belt tensioner to release the locking device (10, 11), a waiting time T₀ following the cessation of the signal that brings about the actuation of the belt tensioner is specified, after the lapse of which the belt tensioner is actuated so as to release the locking device (10, 11).

13. Method according to either of Claims 1 or 12, **characterised in that** when the belt tensioner is actuated so as to release the locking device (10, 11), the motor current is regulated so as to hold the belt spool in a specifiable position until it has been established that the locking device (10, 11) has been released.

## Revendications

1. Procédé d'actionnement d'un tendeur de ceinture réversible destiné à tendre une sangle d'une ceinture de sécurité, qui se déroule autour d'un enrouleur de ceinture, dans un véhicule automobile, dans lequel procédé
- le tendeur de ceinture comporte un système d'entraînement agissant sur l'enrouleur de ceinture,
- la ceinture de sécurité comporte un dispositif de blocage (10, 11) sous forme de dispositif anti-déroulement de la ceinture, qui agit sur l'enrouleur de ceinture dans la direction de déroulement,
- après le déclenchement du tendeur de ceinture et en présence d'une condition prédéfinie, le tendeur de ceinture est actionné de telle sorte que l'enrouleur de ceinture (12) tourne dans la direction d'enroulement (B) afin que le dispositif de blocage (10, 11) de l'enrouleur de ceinture (12) s'ouvre et libère la sangle (13) pour un déroulement,
**caractérisé en ce que**
- une valeur indicative pour l'ouverture du dispositif de blocage (10, 11) est détectée, et
- le tendeur de ceinture est actionné de telle sorte que l'enrouleur de ceinture (12) tourne précisément jusqu'à ce que le dispositif de blocage (10, 11) de l'enrouleur de ceinture (12) s'ouvre et libère la sangle (13) pour un déroulement.

2. Procédé selon la revendication 1, **caractérisé en ce que** le dispositif de blocage (10, 11) de l'enrouleur de ceinture (12) comporte un cliquet d'arrêt (10), qui est monté rotatif et est muni d'une denture et qui coopère avec une denture complémentaire (11) sur l'enrouleur de ceinture (12), les deux dentures engrenant l'une dans l'autre lorsque le dispositif anti-déroulement est actif.

3. Procédé selon la revendication 2, **caractérisé en ce que** l'ouverture du dispositif de blocage (10, 11), provoquée par le désengrènement du cliquet d'arrêt (10) avec la denture (11) réalisée sur l'enrouleur de ceinture (12), est détectée au moyen d'un interrupteur.

4. Procédé selon la revendication 3, **caractérisé en ce que** le désengrènement du cliquet d'arrêt (10) avec la denture (11) réalisée sur l'enrouleur de ceinture (12) est détecté au moyen d'un circuit électrique qui, dans une position prédéfinie du cliquet d'arrêt (11), est fermé par une partie du cliquet d'arrêt (10), laquelle est réalisée en matériau électroconducteur.

5. Procédé selon la revendication 1, **caractérisé en ce que** l'angle de rotation de l'enrouleur de ceinture (12) est détecté au moyen d'un capteur d'angle de rotation et **en ce que** l'ouverture du dispositif de blocage (10, 11) est déterminée à partir de l'angle de rotation.

6. Procédé selon la revendication 1, **caractérisé en ce que** le tendeur de ceinture comporte un système d'entraînement à moteur électrique et **en ce que** la valeur d'un paramètre de service électrique du système d'entraînement à moteur électrique du tendeur de ceinture est enregistrée pendant l'actionnement du tendeur de ceinture et à partir de cette valeur il est déterminé si le dispositif anti-déroulement est actif.

7. Procédé selon la revendication 1, **caractérisé en ce que** le tendeur de ceinture comporte un système d'entraînement à moteur électrique et **en ce que** l'angle de rotation de ce système d'entraînement à moteur électrique est enregistré et le tendeur de ceinture est actionné de telle sorte que le couple de rotation de l'entraînement du tendeur de ceinture augmente jusqu'à ce qu'un angle de rotation prédéfini soit atteint.

8. Procédé d'actionnement d'un tendeur de ceinture réversible destiné à tendre une sangle d'une ceinture de sécurité, qui se déroule autour d'un enrouleur de ceinture, dans un véhicule automobile, en particulier selon l'une quelconque des revendications précédentes, dans lequel procédé
- le tendeur de ceinture comporte un système d'entraînement agissant sur l'enrouleur de ceinture,
- la ceinture de sécurité comporte un dispositif de blocage (10, 11) sous forme de dispositif anti-déroulement de la ceinture, qui agit sur l'enrouleur de ceinture dans la direction de déroulement,
- après le déclenchement du tendeur de ceinture et en présence d'une condition prédéfinie, le tendeur de ceinture est actionné de telle sorte que l'enrouleur de ceinture (12) tourne dans la direction d'enroulement (B) afin que le dispositif de blocage (10, 11) de l'enrouleur de ceinture (12) s'ouvre et libère la sangle (13) pour un déroulement,
**caractérisé en ce que** le tendeur de ceinture est actionné de telle sorte que, lorsque la sangle (13) est tendue et après l'ouverture du dispositif de blocage (10, 11), le couple de rotation du système d'entraînement du tendeur de ceinture diminue si lentement qu'un capteur sensitif de la sangle ne génère pas le déclenchement du dispositif anti-déroulement.

9. Procédé d'actionnement d'un tendeur de ceinture réversible destiné à tendre une sangle d'une ceinture de sécurité, qui se déroule autour d'un enrouleur de ceinture, dans un véhicule automobile, en particulier selon l'une quelconque des revendications précédentes, dans lequel procédé
- le tendeur de ceinture comporte un système d'entraînement agissant sur l'enrouleur de ceinture,
- la ceinture de sécurité comporte un dispositif de blocage (10, 11) sous forme de dispositif anti-déroulement de la ceinture, qui agit sur l'enrouleur de ceinture dans la direction de déroulement,
- après le déclenchement du tendeur de ceinture et en présence d'une condition prédéfinie, le tendeur de ceinture est actionné de telle sorte que l'enrouleur de ceinture (12) tourne dans la direction d'enroulement (B) afin que le dispositif de blocage (10, 11) de l'enrouleur de ceinture (12) s'ouvre et libère la sangle (13) pour un déroulement,
**caractérisé en ce que**, pour favoriser l'ouverture du dispositif de blocage par l'actionnement du tendeur de ceinture, un système d'entraînement pour un dispositif de réglage d'un siège ou d'une poulie de renvoi de la ceinture est actionné de telle sorte que la force de traction dans la ceinture diminue et le dispositif de blocage (10, 11) peut s'ouvrir sous l'effet de l'actionnement du système d'entraînement du tendeur de ceinture.

10. Procédé selon la revendication 1, **caractérisé en ce que** la condition pouvant être prédéfinie pour l'actionnement du tendeur de ceinture en vue de débloquer le dispositif de blocage (10, 11) est la suppression du signal induisant le déclenchement du tendeur de ceinture.

11. Procédé selon la revendication 1 ou 10, **caractérisé en ce que** la condition pouvant être prédéfinie pour l'actionnement du tendeur de ceinture en vue de débloquer le dispositif de blocage (10, 11) est la suppression d'un signal d'activation pour un système d'assistance de freinage ou un système de réglage de la dynamique de conduite.

12. Procédé selon la revendication 1, **caractérisé en ce que** la condition pouvant être prédéfinie pour l'actionnement du tendeur de ceinture en vue de débloquer le dispositif de blocage (10, 11) est un temps d'attente (T₀) consécutif à la suppression du signal induisant le déclenchement du tendeur de ceinture, le tendeur de ceinture étant actionné pour débloquer le dispositif de blocage (10, 11) à la fin de ce temps d'attente.

13. Procédé selon la revendication 1 ou 12, **caractérisé en ce que**, lors de l'actionnement du tendeur de ceinture en vue d'ouvrir le dispositif de blocage (10, 11), le réglage du courant du moteur, destiné à maintenir l'enrouleur de ceinture dans une position à prédéfinir, est assuré jusqu'à ce qu'il soit constaté que le dispositif de blocage (10, 11) s'est ouvert.
